**Europäisches Patentamt**

**European Patent Office**

**Office européen des brevets**

(11) Veröffentlichungsnummer: **0 064 737**

**A2**

(12) # EUROPÄISCHE PATENTANMELDUNG

(21) Anmeldenummer: 82103979.9

(22) Anmeldetag: 07.05.82

(51) Int. Cl.³: **B 23 K 20/10**

(30) Priorität: 13.05.81 DE 3118897

(43) Veröffentlichungstag der Anmeldung:
17.11.82 Patentblatt 82/46

(84) Benannte Vertragsstaaten:
AT BE CH DE FR GB IT LI NL SE

(71) Anmelder: Compur-Electronic GmbH
Steinerstrasse 15
D-8000 München 70(DE)

(72) Erfinder: Lackinger, Ernst
Kerschlacherstrasse 3
D-8000 München 70(DE)

(74) Vertreter: Geyer, Ulrich F., Dr. Dipl.-Phys.
Steinerstrasse 15
D-8000 München 70(DE)

(54) Ultraschallschweiss-Verfahren und -Vorrichtung.

(57) Bei dem erfindungsgemäßen Ultraschall-Schweiß-verfahren wird neben der Ultraschall-Schweißsonde (2) ein zusätzliches Element 3 als Niederhalter verwendet, das mit derselben Ultraschallfrequenz wie die Ultraschall-Schweißsonde 2, jedoch mit verminderter Amplitude schwingt, mit Bereichen außerhalb der Auflagefläche der Ultraschallschweißsonde 2 in Berührung steht und diese außerhalb liegenden Flächen bzw. Teile oder Massen dämpft, die mit der Ultraschallschweißsonde selbst in Berührung stehen oder in unmittelbarer Nähe der Auflagefläche der Ultraschallschweißsonde 2 liegen. Dadurch wird vermieden, daß abstehende und/oder relativ große Masse aufweisende Bereiche bzw. Teile des zu verschweißenden Gegenstands und/oder Bereiche mit geringerer Wandstärke brechen bzw. abbrechen oder der zu verschweißende Gegenstand beim Schweißvorgang in Mitleidenschaft gezogen wird. Es wird weiterhin eine Vorrichtung zur Durchführung des erfindungsgemäßen Verfahrens angegeben, wobei das zusätzliche Element 3 im Innern einer hohlen Ultraschall-Schweißsonde 2 angeordnet ist. Die Nachteile hinsichtlich des Schwingungsverhaltens der Ultraschallschweißsonde, die auftreten, wenn Bohrungen in der Wand der Ultraschall-schweißsonde ausgebildet sind, werden dadurch vermieden, daß die Bohrungen von der Schweißfläche her bzw. zur Schweißfläche hin aufgesägt sind und die Schweißfläche der Schweißsonde in Schweißflächensegmente aufgeteilt ist.

FIG.1

Croydon Printing Company Ltd.

Beschreibung:

Die Erfindung betrifft ein Verfahren und eine Vorrichtung zum Ultraschall-Schweißen, bei dem eine mit einem Ultraschallwandler angeregte Ultraschallsonde mit einem zu verschweißenden Gegenstand in Berührung gebracht und dieser Gegenstand mindestens an der Auflagefläche der Ultraschallsonde in Ultraschallschwingungen versetzt wird. Die Erfindung bezieht sich weiterhin auf eine Vorrichtung zur Durchführung eines solchen Ultraschall-Schweißverfahrens, wobei die Vorrichtung einen Ultraschallwandler, einen Amplitudenwandler und eine mit dem Amplitudenwandler in Verbindung stehende Ultraschallsonde aufweist, die mit einem zu verschweißenden Gegenstand in Berührung steht.

Derartige Verfahren und Vorrichtungen werden allgemein zum Ultraschweißen verwendet und sind dann nicht problematisch, wenn der zu verschweißende Gegenstand keine großen Massen aufweist, die beim Ultraschweißvorgang in Schwingungen versetzt werden. Wenn an dem zu verschweißenden Gegenstand jedoch Teile oder Bereiche vorhanden sind, die eine relativ große Masse aufweisen und/oder relativ weit vom eigentlichen Gegenstand abstehen, werden diese Bereiche bzw. Massen beim Ultraschweißvorgang ebenfalls in Schwingungen versetzt, wobei diese Bereiche bzw. Teile des zu verschweißenden Gegenstands nicht mehr in derselben Phase bzw. nicht mehr mit derselben Intensität oder Amplitude wie die Bereiche des zu verschweißenden Gegenstandes schwingen, die mit der Ultraschall-Schweißsonde in direkter Berührung stehen. Aufgrund der unter-

– 2 –

schiedlichen Schwingungen zwischen den Bereichen
des zu verschweißenden Gegenstands, die mit der
Schweißsonde direkt in Verbindung stehen, und den
Bereichen, die davon entfernt sind und eine relativ
hohe Masse aufweisen, bzw. vom zu verschweißenden
Gegenstand abstehen, kommt es häufig vor, daß der
zu verschweißende Gegenstand bricht oder die abstehenden Teile des zu verschweißenden Gegenstandes
abbrechen.

Probleme bei den herkömmlichen Verfahren und Vorrichtungen treten insbesondere auch dann auf, wenn die verschweißenden Gegenstände Stellen oder Bereiche aufweisen, die kleinere Wandstärken als die übrigen Bereiche
besitzen, und gegebenenfalls darüber hinaus noch mit
relativ großen Massen in Verbindung stehen. Derartige
kritische Stellen und Bereiche brechen aufgrund der
Tatsache, daß die angrenzenden Bereiche bzw. Teile des
zu verschweißenden Gegenstandes nicht mehr in derselben
Phase bzw. in derselben Intensität oder Amplitude wie
die Bereiche des zu verschweißenden Gegenstandes schwingen,
die mit der Ultraschall-Schweißsonde in direkter Berührung stehen, besonders schnell, so daß das Schweißen
überhaupt nicht oder nur mit geringer Ultraschallenergie
möglich ist, wodurch das Ultraschallschweißen einen hohen
Zeitaufwand erfordert und damit unwirtschaftlich ist.

Der Erfindung liegt daher die Aufgabe zugrunde, ein Verfahren und eine Vorrichtung zum Ultraschallschweißen anzugeben bzw. zu schaffen, das bzw. die Nachteile der herkömmlichen Ultraschweiß-Verfahren und Vorrichtungen, nämlich
das leichte Brechen bzw. Abbrechen von Teilen des zu verschweißenden Gegenstandes, nicht aufweist, so daß dadurch

- 3 -

der Ausschuß beim Ultraschweißvorgang wesentlich verringert wird, und/oder mit höherer Energie, also in kürzerer Zeit und dadurch mit höherer Produktivität geschweißt werden kann.

Diese Aufgabe wird erfindungsgemäß mit einem Verfahren gelöst, das die im kennzeichnenden Teil des Anspruchs 1 angegebenen Maßnahmen aufweist.

Die Vorrichtung mit den im kennzeichnenden Teil des Anspruchs 2 angegebenen Merkmalen löst ebenfalls die gestellte Aufgabe.

Aufgrund des zusätzlichen Elementes, das mit derselben Ultraschallfrequenz wie die Ultraschall-Schweißsonde, jedoch gegenüber der Ultraschallschweißsonde mit verminderter Amplitude schwingt, und das an kritischen Stellen bzw. Teilen oder Bereichen des zu verschweißenden Gegenstandes angesetzt wird, ist sichergestellt, daß diese kritischen Bereiche oder Teile auch dann nicht brechen bzw. abbrechen, wenn sie eine relativ hohe Masse aufweisen oder vom zu verschweißenden Gegenstand abstehen.

In Zusammenhang mit der vorliegenden Erfindung wurden Untersuchungen angestellt, wie die eingangs beschriebenen Brüche und das Abbrechen von Teilen bei den zu verschweissenden Gegenständen vermieden werden kann. Dabei wurden die Bereiche mit größerer Masse, die von der Auflagefläche der Ultraschallschweißsonde weiter abliegenden Bereiche und/oder die Bereiche mit relativ großer Masse durch aufsetzen eines Elements im wesentlichen vollständig gedämpft. Diese Dämpfung hatte jedoch zur Folge, daß auch die Bereiche des zu verschweißenden Gegenstands, an denen die Verschweißung erfolgen sollte, soweit gedämpft wurden, daß das Verschweißen überhaupt nicht mehr möglich, nur mit großer Ultraschallenergie oder durch einen langen Schweißvorgang möglich war. Durch die Verwendung des erfindungsgemäßen zusätzlichen Elements, das mit im wesentlichen derselben Ultraschallfrequenz wie die Ultraschallschweißsonde selbst, jedoch mit verminderter Amplitude schwingt, ließ sich eine Dämpfung erreichen, die einerseits den Bruch der neuralgischen Stellen und Bereiche verhinderte, andererseits jedoch den Schweißvorgang selbst nicht derartig in Mitleidenschaft zog, daß ein Verschweißen unmöglich wurde, nur mit hohen Ultraschallenergien oder mit langen Schweißzeiten durchgeführt werden konnte.

Gemäß einer bevorzugten Ausführungsform der Erfindung ist das zusätzliche Element über eine Feder mit der Schweißsonde verbunden. Die Feder bewirkt, daß das zusätzliche Element mit einem je nach der Federkonstanten wählbaren Druck auf die neuralgischen Bereiche des zu verschweißenden Gegenstands aufgedrückt wird, wobei diese Feder für die Ultraschallfrequenz im wesentlichen als starrer Körper anzusehen ist und die Ultraschallschwingungen von der Ultraschallschweißsonde auf das zusätzliche Element überträgt, das dann mit gegenüber der Ultraschweißsonde verminderter Amplitude schwingt.

Darüberhinaus weist die mit der Feder bewirkte Abstützung bzw. Halterung des zusätzlichen Elements den Vorteil auf, daß sich der Druck des zusätzlichen Elements auf den zu verschweißenden Gegenstands unabhängig vom Druck wählen läßt, der für den Schweißvorgang erforderlich ist. Darüberhinaus ermöglicht eine derartige Abstützung des zusätzlichen Elements einen gleichmäßig verteilten Druck auf den zu verschweißenden Gegenstand.

Gemäß einer weiteren bevorzugten Ausführungsform der Erfindung besitzt die Ultraschallschweißsonde einen Hohlraum, der zu dem zu verschweißenden Gegenstand hin offen ist, um abstehende Teile oder Bereiche, die sich im Innern eines zu verschweißenden Bereichs befinden, bei aufgesetztem zusätzlichen Element mit derselben Frequenz und Phase schwingen zu lassen wie die Bereiche des zu verschweißenden Gegenstands, mit denen die verschweißenden Bereiche des zu verschweißenden Gegenstands mit der eigentlichen Ultraschall-Schweißsonde in Berührung stehen.

Das zusätzliche Element im Innern der Ultraschallschweißsonde wird mit einem stabförmigen Halterungsteil in seiner Lage gehalten, das durch wenigstens eine Bohrung in der Schweißsondenwand hindurchragt und außerhalb der Schweißsonde befestigt bzw. aufgehängt ist.

In Zusammenhang mit der vorliegenden Erfindung hat sich herausgestellt, daß innen hohle Ultraschallschweißsonden bzw. Ultraschallschweißsonden mit einer Bohrung in der zylinderförmigen Wand und einem Innenhohlraum schlecht schwingen und die Ultraschallenergie an die zu verschweissende Bereiche schlecht übertragen. Dieser Nachteil wurde gemäß einer sehr vorteilhaften Ausführungsform der Erfindung dadurch vermieden, daß die für die Halterung des zusätzlichen Elements erforderlichen Bohrungen in der Ultraschallschweißsonde zur Schweißfläche hin aufgesägt wurden, so daß entsprechend mehrere Schweißsegmente entstehen. Die einzelnen Schweißsegmente schwingen nun wieder einwandfrei und gestatten ein sicheres Verschweißen des zu verschweißenden Gegenstands.

Die Erfindung wird nachstehend anhand der Zeichnungen beispielsweise näher erläutert. Es zeigen:

Fig. 1 einen Querschnitt durch die wesentlichsten Teile einer Vorrichtung zum Verschweißen einer Kunststoffküvette mit einem Küvettendeckel, wobei bei dieser Vorrichtung die Merkmale der vorliegenden Erfindung Anwendung finden,

Fig. 2   eine Darstellung einer innen hohlen Ultraschallschweißsonde gemäß der Erfindung mit einzelnen Schweißsegmenten und

Fig. 3   die in Figur 3 dargestellte Ultraschallschweißsonde von der Schweißfläche her gesehen.

Das erfindungsgemäße Verfahren sowie die erfindungsgemäße Vorrichtung werden am Beispiel der Verschweissung einer Küvette 20 mit einem Küvettendeckel 21 erläutert. Das erfindungsgemäße Verfahren und je nach den vorliegenden Gegebenheiten ausgebildete erfindungsgemäße Vorrichtungen kann bzw. können selbstverständlich auch zum Verschweißen anderer Gegenstände verwendet werden.

Ein nicht dargestellter Ultraschallwandler steht mit einem Amplitudenwandler 1 in Verbindung, an dem seinerseits eine Ultraschallsonde 2 fest angebracht ist.

Die Ultraschallsonde 2 weist einen zum zu verschweissenden Gegenstand, im vorliegendem Falle zum zu verschweißenden Küvettendeckel 21 hin offenen Hohlraum 6 auf, der über wenigstens eine radiale Bohrung 8 mit dem Außenraum in Verbindung steht.

Die Ultraschallschweißsonde 2 wird zusammen mit dem Ultraschallwandler und dem Amplitudenwandler 1 auf den Küvettendeckel 21 abgesenkt. Durch den ausgeübten Druck und die Ultraschallschwingungen wird der obere Rand der Küvette 20 mit dem entsprechenden Innenbereich des Küvettendeckels 21 ultraschall-verschweißt.

- 7 -

Wäre der Küvettendeckel 21 flach, ohne abstehende Teile oder hätte keine dünnen, kritischen Bereiche oder Stellen, so würden beim Verschweißen keine Schwierigkeiten auftreten. Besitzt der Küvettendeckel 21 jedoch abstehende Teile, wie beispielsweise den Zapfen 22 mit einer relativ großen Masse, oder Einkerbungen 23, so schwingt auch dieser Zapfen 22 mit der großen Masse, wenn die Ultraschallschweißsonde 2 mit dem Küvettendeckel 21 in Berührung kommt. Da zwischen dem Bereich, auf dem die Ultraschallschweißsonde 2 auf den Küvettendeckel 21 aufliegt, und der schwingenden Masse bzw. dem Zapfen 22 ein gewisser Abstand herrscht, schwingt die Masse des Zapfens 22 bzw. die von der Auflagenfläche der Ultraschallsonde etwas abliegenden Teile oder Bereiche mit einer zur eigentlichen Ultraschallschwingung etwas versetzten Phase bzw. nicht mehr im Rhythmus oder nicht mehr in derselben Intensität oder Amplitude mit der übrigen Deckelfläche. Wenn die Masse des Zapfens 22 ausreichend groß ist, der Zapfen 22 vom Deckel relativ weit absteht und daher relativ große Hebelwirkungen auftreten und/oder eine Einkerbung vorhanden ist, bricht der Zapfen ab. Dies ist insbesondere dann der Fall, wenn um den Zapfen herum die Küvettendeckeldicke etwas kleiner ist als im übrigen Bereich des Küvettendeckels 21, was deshalb bewußt so ausgeführt ist, weil der Zapfen dazu dient, daß ein Benutzer durch Umdrücken des Zapfens 22 den Küvettendeckel 21 bzw. die verschlossene Küvette 20 öffnen soll, um entweder einen festen Gegenstand oder chemische Substanz in die Küvette zu bringen, oder aus der Küvette Flüssigkeit zu entnehmen.

Um zu verhindern, daß während des Verschweißens des Küvettendeckels 21 mit der Küvette 20 der Zapfen ab- bzw. aus dem Küvettendeckel 21 herausbricht, ist erfindungsgemäß das zusätzliche Element 3 in Form eines Niederhalters vorgesehen, der im Innern der hohlen Ultraschall- Schweißsonde 2 angeordnet ist. Der Niederhalter 3 ist hinsichtlich der Auflagenfläche auf dem zu verschweissenden Gegenstand, im vorliegenden Falle dem Küvettendeckel 21, so ausgebildet, daß die Fläche des Niederhalters an der Stelle des Küvettendeckels 21 aufliegt, an der die Gefahr eines Bruches oder eines Abbrechens besonders groß ist. Im vorliegenden Beispiel befindet sich die neuralgische Stelle des Küvettendeckels 21 um den Zapfen 22 herum, bzw. an der Einkerbung 23, da der Zapfen eine relativ große Masse aufweist und aufgrund seiner abstehenden Form einen relativ langen Hebelarm aufweist bzw. an der Einkerbung 23 die Gefahr eines Bruches besonders groß ist.

Der Niederhalter 3 ist an seinem dem zu verschweissenden Gegenstand 21 abgewandten Ende über eine Feder 4 mit der Ultraschallschweißsonde 2 verbunden. Die Feder 4 ist hinsichtlich der Ultraschallfrequenz, die beispielsweise in einem Bereich um 40kHz liegen kann, im wesentlichen ein starrer Körper und überträgt die Ultraschallschwingungen von der Ultraschallschweißsonde 2 auf den Niederhalter 3. Durch die Bohrungen 8 in der Schweißsondenwand ragt ein Halterungsteil 7 in Form einer Querstange, die mit den Niederhalter 3 in Verbindung steht und deren äußere Enden in Bohrungen 9 von Halterungsarmen 10 liegen.

Bei Absenken der Ultraschweißanordnung auf den zu verschweißenden Gegenstand 21 werden die Halterungsarme 10, die über einen mit der Schweißanordnung fest verbundenen Rahmen 11 in Verbindung stehen, mit abgesenkt, bis der etwas zum zu verschweißenden Gegenstand vorstehende Niederhalter 3 mit dem zu verschweißenden Gegenstand 21 in Berührung kommt. Bei weiterem Absenken der Schweißanordnung wird der Niederhalter samt dem als Querstange ausgebildeten Halterungsteil entgegen die Feder 4 relativ zur eigentlichen Ultraschallschweißsonde nach oben gedrückt so daß sich die Querstange 7 vom unteren Rand der Bohrungen 9 und 8 abhebt, die mindestens im Bewegungsbereich der Querstange 7 einen größeren Durchmesser aufweisen als die Querstange 7 selbst. Der Niederhalter 3 wird nun nicht mehr von der Querstange 7 gestützt und liegt voll auf den entsprechenden Bereichen des zu verschweissenden Gegenstands bzw. des Küvettendeckels 21 mit einem über die Auflagefläche relativ gleich verteilten Druck auf, der nicht durch die Absenkung der Schweißanordnung sondern nur durch die Federkraft der Feder 4 festgelegt ist. Mit der sehr vorteilhaften Abstützung bzw. Halterung des Niederhalters läßt sich der Druck des Niederhalters auf den zu verschweißenden Gegenstand unabhängig vom Druck wählen, der für den Schweißvorgang erforderlich ist. Darüber hinaus ist sichergestellt, daß der Niederhalter mit gleichmäßig verteiltem Druck auf dem zu verschweißenden Gegenstand aufliegt.

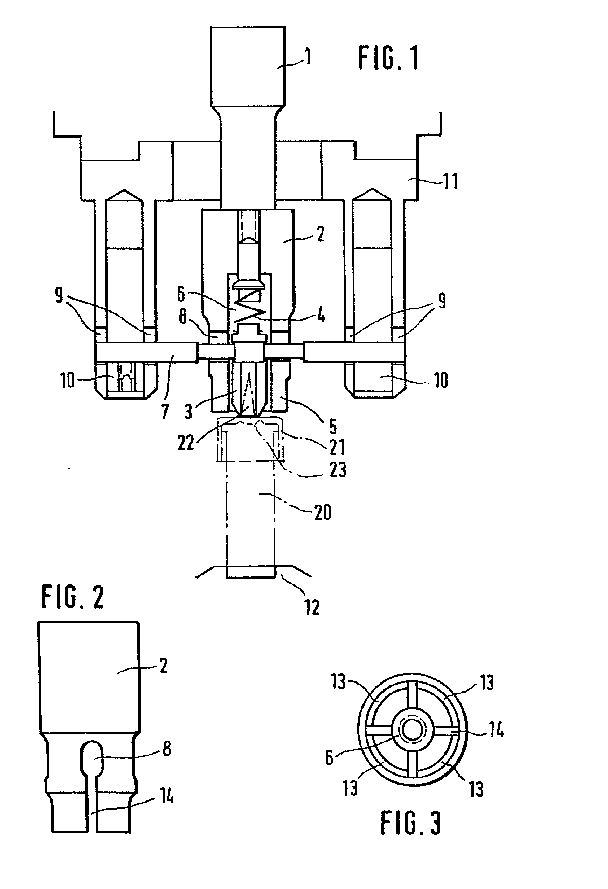

Selbstverständlich muß der zu verschweißende Gegenstand, im vorliegendem Fall die Küvette 20, in einem Gegenlager gehalten bzw. auf einem Gegenlager aufgelegt sein, das in Figur 1 mit dem durch das Bezugszeichen 12 versehene Teil angedeutet ist.

In Figur 2 ist die Ultraschallschweißsonde gemäß einer besonders bevorzugten Ausführungsform der Erfindung nochmals in größerem Maßstab und um 90 Grad gegenüber der Darstellung in Figur 1 gedreht dargestellt. Die Bohrung 8, durch die das Halterungsteil 7 hindurchführt, ist zur Schweißfläche hin aufgesägt, so daß, wie in Figur 3 ersichtlich ist, Schweißflächensegmente vorhanden sind. Wie bereits ausgeführt, hat sich im Zusammenhang mit der vorliegenden Erfindung herausgestellt, daß Bohrungen in der Wand der hohlen Ultraschallschweißsonde 2 zu starken Dämpfungen führen bzw. daß in diesem Falle die Ultraschallschweißsonde 2 schlecht schwingt und damit nicht genügend Energie für den Schweißvorgang auf den zu verschweißenden Gegenstand übertragen kann. Dieser Nachteil wird gemäß einem erfinderischen Merkmal dadurch vermieden, daß die Bohrung 8, und vorzugsweise alle anderen in der Schweißsondenwand vorgesehenen Bohrungen auch, zur Schweißfläche hin aufgesägt wird, so daß ein Schlitz 14 zur Schweißfläche hin entsteht, wodurch die Schweißfläche in einzelne Segmente 13 unterteilt wird. Erstaunlicherweise bewirkt diese einfache Maßnahme, daß nunmehr die Ultraschallschweißsonde trotz der Bohrung 8 einwandfrei schwingt und die Schwingungsenergie ohne Probleme auf den zu verschweißenden Gegenstand übertragen kann.

Die vorliegende Erfindung wurde lediglich beispielsweise anhand der dargestellten Ausführungsformen erläutert. Dem Fachmann sind zahlreiche Abwandlungen und Ausgestaltungen möglich, ohne das dadurch der Erfindungsgedanke erlassen wird.

Compur-Electronic GmbH,                    24. April 1981
München                                    770/Dr.G/Ve/DP-774

Ultraschallschweiß-Verfahren und -Vorrichtung

Patentansprüche:

1. Ultraschall-Schweißverfahren, bei dem eine mit einem Ultraschallwandler angeregte Ultraschallsonde mit einem zu verschweißenden Gegenstand in Berührung gebracht und dieser Gegenstand mindestens an der Auflagefläche der Ultraschallsonde in Ultraschallschwingungen versetzt wird,
dadurch gekennzeichnet,
daß außerhalb der Auflagefläche der Ultraschallsonde liegende Bereiche des zu verschweißenden, mit der Ultraschallschweißsonde in Berührung stehenden Gegenstands mittels eines zusätzlichen Elements gedämpft wird, das mit im wesentlichen derselben Ultraschallfrequenz wie die Ultraschallschweißsonde jedoch mit verminderter Amplitude schwingt.

2.  Vorrichtung zur Durchführung des Ultraschallschweißverfahrens nach Anspruch 1, mit
    einem Ultraschallwandler,
    einem Amplitudenwandler (1) und
    einer mit dem Amplitudenwandler (1) in Verbindung
    stehenden Ultraschallschweißsonde (2), die mit einem
    zu verschweißenden Gegenstand (21) in Berührung steht,
    g e k e n n z e i c h n e t   d u r c h
    ein zusätzliches Element (3), das mit im wesentlichen
    derselben Ultraschallfrequenz wie die Ultraschallschweißsonde (2), jedoch mit verminderter Amplitude schwingt,
    und mit wenigstens einem außerhalb der Auflagefläche der Ultraschallschweißsonde (2) liegenden Bereich in Berührung steht.

3.  Vorrichtung nach Anspruch 1, dadurch gekennzeichent,
    daß das zusätzliche Element (3) über eine Feder (4) mit
    der Ultraschallschweißsonde (2) in Verbindung steht.

4.  Vorrichtung nach Anspruch 1 oder 2, dadurch gekennzeichnet, daß die Ultraschallschweißsonde (2) eine
    rahmen- bzw. zylinderförmige Wand (5) mit einem Innenhohlraum (6) aufweist, und daß das zusätzliche Element
    (3) im Innenraum (6) der Ultraschallschweißsonde (2)
    angeordnet ist.

5.  Vorrichtung nach einem der Ansprüche 2 bis 4, dadurch
    gekennzeichnet, daß das zusätzliche Element (3) von
    einem Halterungsteil (7) gehalten ist, das durch wenigstens eine Bohrung (8) der rahmen- bzw. ringförmigen
    Wand (5) der Ultraschallschweißsonde (2) hindurchragt.

6.  Vorrichtung nach einem der Ansprüche 2 bis 5, dadurch
    gekennzeichnet, daß die Bohrung (8) in der rahmen- bzw.
    ringförmigen Wand (5) der Ultraschallschweißsonde (2)
    zur Schweißfläche hin aufgesägt ist (Fig. 2 und 3).

FIG.1

FIG.2

FIG.3